# EUROPEAN PATENT SPECIFICATION

(11) **EP 1 538 114 B1**
(45) Date of publication and mention of the grant of the patent: **20.02.2008**
(21) Application number: 04078266.6
(22) Date of filing: 30.11.2004
(51) Int. Cl.: B65G 21/20, B65G 47/30

(54) **Feeding apparatus for products such as fruits**
Beschickvorrichtung für Produktionsgegenstände, wie Früchte
Appareil d'alimentation pour produits tels que des fruits

(30) Priority: 01.12.2003 EP 03078789
(43) Date of publication of application: 08.06.2005
(73) Proprietor: FPS Food Processing Systems B.V., 2631 RE Nootdorp (NL)
(72) Inventor: Van Wijngaarden, Erik, 7558 WL Venlo (NL); Van den Berg, Walter, 2272 HA Voorburg (NL)
(74) Representative: Winckels, Johannes Hubertus F.

(56) References cited:
- GB-A- 1 276 361
- PATENT ABSTRACTS OF JAPAN vol. 010, no. 299 (M-524), 11 October 1986 (1986-10-11) -& JP 61 111221 A (ISEKI & CO LTD), 29 May 1986 (1986-05-29)
- PATENT ABSTRACTS OF JAPAN vol. 010, no. 267 (M-516), 11 September 1986 (1986-09-11) -& JP 61 090914 A (ISEKI & CO LTD), 9 May 1986 (1986-05-09)

## Description

The present invention relates to an apparatus as described in the preamble of claim 1.

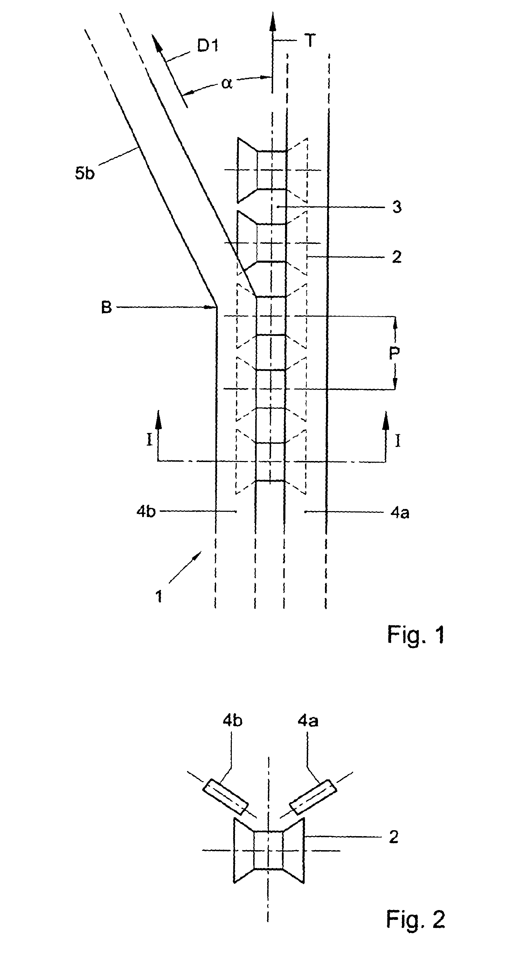

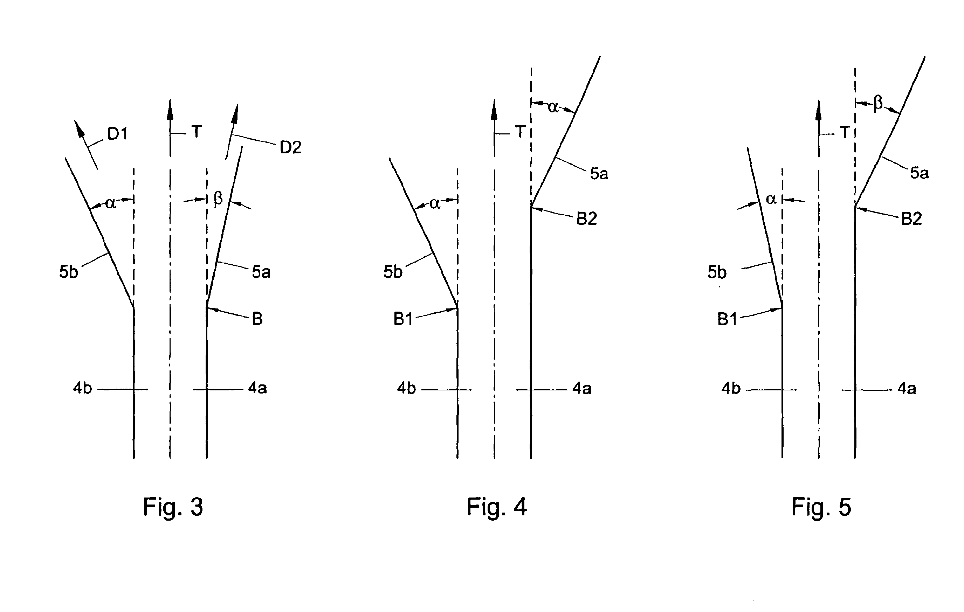

Such an apparatus is described in JP61111221, which describes the conveyance of products such as fruit situated in file. With a first conveyor, randomly arranged products are supplied to a second conveyor. This second conveyor consists of two brushes rotating in opposite senses, which provide for a continuous movement of the products in the conveying direction. As indicated in the drawing, in order to transfer the products situated behind and against each other to a roller conveyor, the products are gradually supplied to and onto the rollers by means of an intermediate section. This intermediate section is formed by two flat continuous conveyor belts, positioned obliquely relative to a vertical plane, which, directly after the brushes, function either as a V-channel (Figure 4) or, starting as a V-channel, diverge to some extent (Figure 1). At an appropriate speed of the conveyor belts, the products will, respectively, end up on the rollers with some spread, or not only continue in the conveying direction but moreover move down gradually between the belts.

Ideally, the sequential order effected will be preserved. However, when products such as fruits, nearly always having a greater or lesser spread in size, are being conveyed, their falling from between the flat belts will proceed less uniformly than expected. In fact, the sequential order may even be disturbed, or fruits may end up side by side between two rollers, thus forming 'doubles'.

In order to avoid this problem as much as possible, the apparatus according to the invention is characterized in that from a well-defined location the endless conveyor belts continue at different angles relative to the conveying direction, with the conveyor belts diverging mutually.

What is advantageously achieved with this arrangement is that the products are fed gradually onto the conveyor. Precisely by making the angles unequal, the products will not only be gradually positioned on the conveyor, but at the same time also lean against the conveyor belt which, of the two conveyor belts, deviates the least from the continuous conveying direction. What is furthermore achieved in this way is that the sequential order which the products assume between the two conveyor belts is preserved more than before. As a result, both the singulation of the products and the filling of the conveyor will be improved. Moreover, in the conveyance of fruits, fewer injuries will occur as a result of the reduction of the height of drop.

Further embodiments of the apparatus according to the invention are characterized in that one of the conveyor belts proceeds straight on, and, next, that the angle for one conveyor belt has a value between 0° and 15° and for the other conveyor belt has a greater value between 0° and 30°.

With this choice of possibilities, which can also be seen as setting possibilities, products of all sizes will preserve their sequential order in a suitable manner and also can be fed onto the conveyor smoothly.

Other embodiments of the apparatus according to the invention are characterized in that the above-mentioned conveyor belt proceeding straight on deviates, at a position situated further downstream, from the conveying direction at a second angle, more particularly that the angles at which the two conveyor belts deviate from the conveying direction are equal, or also that the above-mentioned second angle is greater than the angle at which the opposite conveyor belt deviates, from a position situated upstream, from the conveying direction at a first angle, particularly the first angle having a value between 0° and 15° and the second angle having a value between 0° and 30°.

What is achieved with great advantage by the use of conveyor belts deviating one after the other, is that on the one hand the sequential order is preserved and, on the other, in particular where the second deviation begins, the transfer onto the conveyor is further improved, it being possible for this transfer to be done still more gradually.

In yet another embodiment of the present invention, the apparatus is characterized in that the speed of each conveyor belt is separately settable. Such a feature is known per se in this technical field, for instance as described in a brochure of the firm COMPAC, "CompacSLS", 2001. What is achieved in that way is that the products are not only translated, i.e. conveyed in the conveying direction, but also rotated, thereby enabling the products that are not properly disposed in line to rotate away from each other. By presently combining this feature with the above-mentioned features according to the present invention, advantageously, a further improved singulation result and filling result are obtained, and fewer injuries occur during fruit transfer.

Further details of the apparatus according to the present invention will be discussed with reference to a drawing, in which:
Fig. 1 shows a top plan view of a first exemplary embodiment,
Fig. 2 shows a cross section along line I-I in Fig. 1, and
Figs. 3, 4 and 5 schematically show top plan views of further exemplary embodiments.

In the different figures, the same parts and aspects are numbered and designated in the same way.

In Fig. 1, in top plan view, an endless conveyor 1 moves in conveying direction T. In the exemplary embodiment drawn, the conveyor is a roller conveyor with rollers 2, more particularly hourglass-shaped rollers, defining between them, viewed in the conveying direction, positions or intermediate spaces 3 where products (not shown) are situated and supported by these rollers 2. The distance p between the rollers 2, calculated between dotted lines which represent the axis positions, is the so-called pitch. For a conveyor, this distance is generally not settable, but is highly determinative of its capacity, more particularly the filling degree and output (number of products per second). Such endless conveyors, being roller conveyors in the present case, are very well known in the field of conveyance and sorting, in particular fruit sorting.

Furthermore, in Fig. 1, two endless conveyor belts 4a,b are represented, positioned obliquely relative to a vertical plane and, as represented, at least for a part above the rollers 2. These conveyor belts 4a,b jointly constitute a V-channel. This V-channel proceeds generally horizontally. It will be clear to those skilled in the art that slightly downwardly inclined, and hence gradually downwardly slanting, V-channels are also possible.

In the conveying direction T, at B, a kink or bend is provided in the left-hand (as viewed from above) conveyor belt 4b. From bend B, this conveyor belt, indicated after the bend as bend part 5b, continues its path in direction D1 at an angle α. It will be clear to those skilled in the art that the conveyors mentioned are driven in a conventional manner by driven gears or driven rollers. Furthermore, it will be clear that in a suitable manner the speeds can all be set, thereby suitably spreading the products in the continuous direction, in particular at intermediate distances matching the above-mentioned pitch p.

In Fig. 2, a cross section along I-I in Fig. 1 is represented. It is clearly indicated how the conveyor belts 4a,b are disposed above the rollers 2. Further, the dotted lines indicate the axis directions for, for instance, the driving rollers for these conveyor belts.

In Figs. 3, 4 and 5, further embodiments according to the invention are shown schematically.

In Fig. 3, at the same bend location B, the two belts diverge as bend parts 5a,b in different directions D1,2 at angles α, β relative to the conveying direction T, with β < α.

In Fig. 4, two bend locations B1,2 are indicated, with B2 downstream of B1. In this exemplary embodiment, the bend parts 5a,b diverge at the same angle α with respect to the conveying direction T. An advantage of this is that during assembly more similar parts can be used.

In Fig. 5, compared with Fig. 4, in addition the angles are different, now with α < β.

For the exemplary embodiments where two bends B1,2 are used, the distance between B1 and B2 will be suitably chosen. Besides the fact that this distance may be settable, it will generally be chosen such, for instance a few pitches p long, that, at the set speeds, angles and product sizes, singulation and filling of the conveyor take place optimally and with as few injuries as possible.

In general, the conveyor, as well as the continuous parts of the V-channel preceding the diverging parts thereof, will extend substantially horizontally. By contrast, after the bend, via an inclined portion, a gradual transition from a V-channel to a conveyor will be set.

In the figures, it is not indicated how the bend is provided in the conveyor belts making up the V-channel. It will be clear to those skilled in the art that such a bend is preferably formed by a freely rotating roller over which the conveyor belt, which is also an endless belt itself, is guided. More particularly, the direction of the axis of the roller relative to the continuous direction of the conveyor determines the direction of the inclination given to the conveyor belt. In that case, the three possibilities are those whereby the edges continue approximately horizontally but the belt deviates as schematically indicated above, or the belt inclines downwards to some extent, or even proceeds to run upwards.

For the case where the belt runs slightly downwards, it has been found that after a first section of V-channel according to the prior art with the positioning in file more or less completed, each product will briefly accelerate in the second downwardly inclined section because of the inclination. At the same time, a distance is thereby created between the products situated behind each other. What is advantageously achieved by suitably choosing the speeds relative to the speed of the conveyor 1 is that the products in a good approximation possess an intermediate distance which is equal to the pitch of the conveying positions of the conveyor 1. A further great advantage is that precisely by virtue of this inclination, the products will gradually assume their place in these positions.

It has further been found that a suitable inclination is one where adjacent the bend the height of the belts of the V-channel is at least three product heights, with the deviation angles chosen in the ranges as indicated above. With apparatuses known per se, these heights are settable, while further the earlier-mentioned horizontal position can be fine-adjusted in order to make in particular the transition to the conveyor still smoother.

It will be clear to those skilled in the art that small deviations from and differences from the examples as described above also fall within the scope of the claims. For instance, the directions D1,2 can be curved, and the bend parts may include further bends. Moreover, the orientation relative to the above-mentioned vertical plane may be slowly rotated to thereby transfer the products onto the conveyor still more smoothly.

Further small modifications and variants on the above-mentioned exemplary embodiments are to be understood to fall within the scope of protection of the appended claims.

## Claims

1. An apparatus for transferring products, such as fruit, onto, and supplying same to a roller conveyor (1), wherein the intermediate spaces between successive rollers (2), in particular hourglass-shaped rollers, form nests (3) for a product, wherein, viewed in the conveying direction (T), preceding the conveyor, the apparatus is provided with two flat endless conveyor belts (4a, 4b) positioned obliquely relative to a vertical plane, continuous in the conveying direction (T), functioning as V-channel,
**characterized in that**
from a well-defined location (B), said endless conveyor belts (4a, 4b) continue at different angles (a,b) relative to the conveying direction, with the conveyor belts diverging mutually.

2. An apparatus according to claim 1, **characterized in that** one of the conveyor belts (4a, 4b) proceeds straight on.

3. An apparatus according to claim 1, **characterized in that** the angle (a, b) for one conveyor belt (4a) has a value between 0° and 15° and for the other conveyor belt (4b) has a greater value between 0° and 30°.

4. An apparatus according to claim 2, **characterized in that** said conveyor belt (4a) proceeding straight on deviates, at a position situated further downstream, from the conveying direction at a second angle.

5. An apparatus according to claim 4, **characterized in that** the angles at which the two conveyor belts (4a, 4b) deviate from the conveying direction are equal.

6. An apparatus according to claim 4, **characterized in that** said second angle is greater than the angle at which the opposite conveyor belt (4b), from a position (B1) situated upstream, deviates from the conveying direction at a first angle.

7. An apparatus according to claim 6, **characterized in that** the first angle has a value between 0° and 15° and the second angle has a value between 0° and 30°.

8. An apparatus according to any one of the preceding claims, **characterized in that** the speed of each conveyor belt (4a, 4b) is separately settable.

9. An apparatus according to any one of the preceding claims,
**characterized in that** the conveyor belts (4a, 4b) diverge, whereby a bend is obtained at the location of divergence, with the conveyor belts being guided over a freely rotating roller.

10. An apparatus according to claim 9, **characterized in that** the bend is provided at a height of at least three product heights above said conveyor (1), while with the diverging conveyor belts the products are further given a downward guidance.

## Patentansprüche

1. Vorrichtung zum Überführen von Produkten, wie Früchten, auf und zum Zuführen derselben zu einem Rollenförderer (1), wobei die Zwischenräume zwischen aufeinander folgenden Rollen (2), insbesondere sanduhrglasförmigen Rollen, Nester (3) für ein Produkt bilden, wobei die Vorrichtung in Förderrichtung (T) betrachtet vor dem Förderer mit zwei flachen endlosen Förderbändern (4a, 4b) versehen ist, die in Bezug auf eine senkrechte Ebene schräg angeordnet und in Förderrichtung (T) ununterbrochen sind und als V-Kanal wirken,
**dadurch gekennzeichnet, dass**
die endlosen Förderbänder (4a, 4b) ab einer wohl definierten Stelle (B) in Bezug auf die Förderrichtung unter verschiedenen Winkeln (a, b) verlaufen, wobei die Förderbänder auseinander laufen.

2. Vorrichtung nach Anspruch 1, **dadurch gekennzeichnet, dass** sich eines der Förderbänder (4a, 4b) gerade fortsetzt.

3. Vorrichtung nach Anspruch 1, **dadurch gekennzeichnet, dass** der Winkel (a, b) für ein Förderband (4a) einen Wert zwischen 0 Grad und 15 Grad und für das andere Förderband (4b) einen größeren Wert zwischen 0 Grad und 30 Grad aufweist.

4. Vorrichtung nach Anspruch 2, **dadurch gekennzeichnet, dass** das Förcierband (4a), das sich gerade fortsetzt, an einer Position, die sich weiter förderstromabwärts befindet, von der Förderrichtung in einem zweiten Winkel abweicht.

5. Vorrichtung nach Anspruch 4, **dadurch gekennzeichnet, dass** die Winkel, unter denen die beiden Förderbänder (4a, 4b) von der Förderrichtung abweichen, gleich sind.

6. Vorrichtung nach Anspruch 4, **dadurch gekennzeichnet, dass** der zweite Winkel größer als der Winkel ist, unter dem das gegenüberliegende Förderband (4b) ab einer Position (B1), die sich förderstromaufwärts befindet, von der Förderrichtung in einem ersten Winkel abweicht.

7. Vorrichtung nach Anspruch 6, **dadurch gekennzeichnet, dass** der erste Winkel einen Wert zwischen 0 Grad und 15 Grad und der zweite Winkel einen Wert zwischen 0 Grad und 30 Grad aufweist.

8. Vorrichtung nach einem der vorgehenden Ansprüche, **dadurch gekennzeichnet, dass** die Geschwindigkeit jedes Förderbandes (4a, 4b) getrennt einstellbar ist.

9. Vorrichtung nach einem der vorhergehenden Ansprüche, **dadurch gekennzeichnet, dass** die Förderbänder (4a, 4b) auseinander laufen, wobei an der Stelle des Auseinanderlaufens eine Biegung erhalten wird, wobei die Förderbänder über eine sich frei drehende Rolle geführt werden.

10. Vorrichtung nach Anspruch 9, **dadurch gekennzeichnet, dass** sich die Biegung auf einer Höhe von wenigstens drei Produkthöhen über dem Förderer (1) befindet, während den Produkten mit den auseinander laufenden Förderbändern auch eine nach unten gerichtete Führung zu Teil wird.

## Revendications

1. Appareil pour transférer des produits, tels que des fruits, sur, et fournir ceux-ci à un transporteur à rouleaux (1), dans lequel les espaces intermédiaires entre les rouleaux successifs (2), en particulier des rouleaux en forme de sablier, forment des cavités (3) pour un produit, dans lequel, dans la direction de transport (T) avant le transporteur, l'appareil est muni de deux bandes de transport sans fin plates (4a, 4b) positionnées obliquement par rapport à un plan vertical, en continu dans la direction de transport (T), agissant comme un canal en forme de V,
**caractérisé en ce qu'**à partir d'un emplacement bien défini (B), lesdites bandes de transport sans fin (4a, 4b) continuent selon des angles différents (a, b) par rapport à la direction de transport, avec les bandes de transport divergeant mutuellement.

2. Appareil selon la revendication 1,
**caractérisé en ce que** l'une des bandes de transport (4a, 4b) avancent de façon rectiligne.

3. Appareil selon la revendication 1,
**caractérisé en ce que** l'angle (a, b) pour une bande de transport (4a) a une valeur entre 0° et 15° et pour l'autre bande de transport (4b) a une valeur plus grande entre 0° et 30°.

4. Appareil selon la revendication 2,
**caractérisé en ce que** ladite bande de transport (4a) avançant de façon rectiligne s'écarte, au niveau d'une position située plus loin en aval, de la direction de transport selon un second angle.

5. Appareil selon la revendication 4,
**caractérisé en ce que** les angles selon lesquels s'écartent les deux bandes de transport (4a, 4b) de la direction de transport, sont égaux.

6. Appareil selon la revendication 4,
**caractérisé en ce que** ledit second angle est supérieur à l'angle selon lequel la bande de transport opposée (4b), à partir d'une position (B1) située en amont, s'écarte de la direction de transport selon un premier angle.

7. Appareil selon la revendication 6,
**caractérisé en ce que** le premier angle a une valeur entre 0° et 15° et le second angle a une valeur entre 0° et 30° .

8. Appareil selon une quelconque des revendications précédentes,
**caractérisé en ce que** la vitesse de chaque bande de transport (4a, 4b) est réglable séparément.

9. Appareil selon une quelconque des revendications précédentes,
**caractérisé en ce que** les bandes de transport (4a, 4b) s'écartent, grâce à quoi un coude est obtenu au niveau de l'emplacement de divergence, avec les bandes de transport qui sont guidées sur un rouleau tournant librement.

10. Appareil selon la revendication 9,
**caractérisé en ce que** le coude est prévu à une hauteur d'au moins trois hauteurs de produit au-dessus dudit transporteur (1), tandis que, avec les bandes de transport qui s'écartent, les produits sont de plus entraînés selon un guidage descendant.
